(19) Europäisches Patentamt
European Patent Office
Office européen des brevets

(11) Publication number: **0 362 898 A2**

# (12) EUROPEAN PATENT APPLICATION

(21) Application number: 89118751.0

(51) Int. Cl.5: B01D 53/22

(22) Date of filing: 09.10.89

(30) Priority: 07.10.88 IL 87977

(43) Date of publication of application:
11.04.90 Bulletin 90/15

(84) Designated Contracting States:
AT BE CH DE ES FR GB GR IT LI LU NL SE

(71) Applicant: YEDA RESEARCH AND DEVELOPMENT COMPANY LIMITED
P.O. Box 95
Rehovot 76100(IL)

(72) Inventor: Reich, Shymon
32 Eisenberg Street
Rehovot(IL)
Inventor: Cabasso, Israel
131 Buckingham Avenue
Syracuse, N.Y. 13319(US)

(74) Representative: Vossius & Partner
Siebertstrasse 4 P.O. Box 86 07 67
D-8000 München 86(DE)

## (54) System and method for separating gases.

(57) The invention relates to a new method for the separation of gaseous paramagnetic species from diamagnetic or weakly paramagnetic gaseous species by contacting the mixture of such species with a high Tc superconductive material in permeable form, so that one of the species is enriched respective of the other one by permeation through such porous barrier. There is further provided a system for carrying out such an enrichment process.

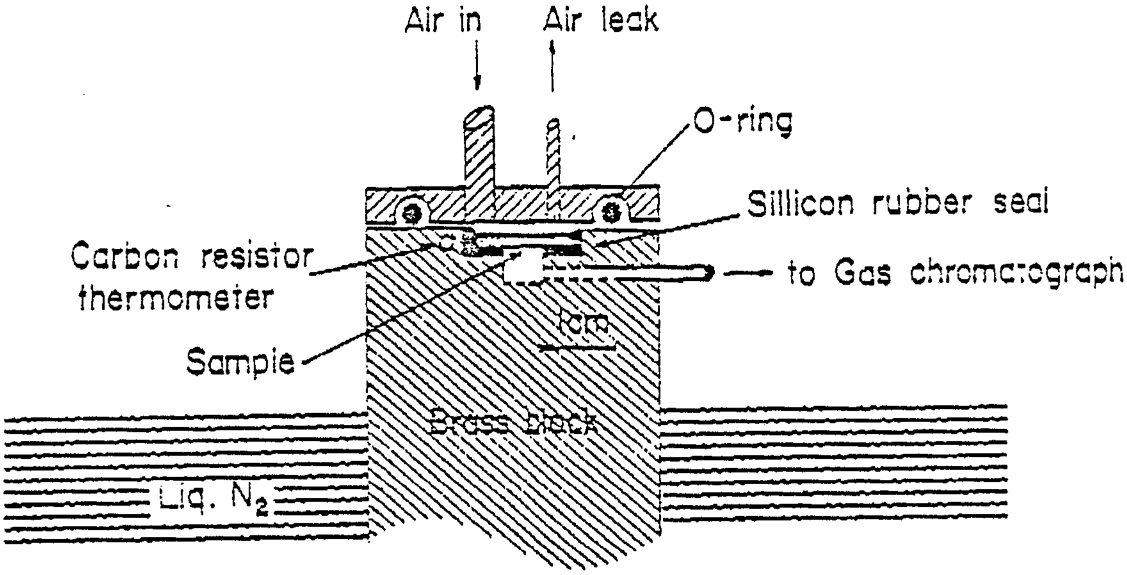


Figure 2

EP 0 362 898 A2

The invention relates to a method for the separation or enrichment of diamagnetic from paramagnetic molecules and to a system for effecting such separations. The method is based on the discovery that the repulsive interaction between an elementary magnetic dipole (having a magnetic moment) and a micro-cavity in a suitable material in the superconductive state can effect separation of small molecules (S. Reich and I. Cabasso, Nature 338, 330 (1989)). Preferred superconductive materials are ceramic and composite superconductors.

The invention further relates to means for effecting such separations, comprising a semi-permeable barrier of such superconductive material through which the gaseous mixture of materials is passed, resulting in the desired separation.

The invention is based on the following scientific principles. The inventor stresses that these are only provided as background information, and the inventor is not bound by detailed scientific explanations. The energy of interaction (E) of a magnetic dipole (m) and a superconducting wall is easily calculated by the mirror principle (Reich, S., Amer. J. Physics. July 1988). ee Figure 1. This interaction is given by:

$$E = \frac{\bar{m}_1\bar{m}_2}{r^3} - \frac{3(\bar{m}_1\bar{r})(\bar{m}_2\bar{r})}{r^5} = \frac{m^2}{r^3}\{\cos \xi - 3\cos\theta_1 \cos\theta_2\} \quad (1)$$

where $\overline{m}_2$ is the mirror image of $\overline{m}_1$, and $\theta_1 + \theta_2 = 180^\circ$. The thermal tumbling of m when averaged over all orientations $\theta$ gives

$$\langle E\rangle = \frac{3}{2}\frac{m^2}{r^3} \quad (2)$$

Suppose we enclose the tumbling magnetic dipole in the center of a cubic cavity and ask: at what distance of confinement is the repulsive interaction of the superconducting walls equal to the thermal kinetic energy of the elementary magnetic moment. The following equations apply:

$6\langle E\rangle = \frac{3}{2}kT$ (3)

thus

$$r = \left(\frac{6m^2}{kT}\right)^{1/3} \quad (4)$$

We can now substitute $m^2$ by the paramagnetic susceptibility $\chi$ (T)

$$\chi(T) = \frac{m^2 N}{3kT} \quad (5)$$

where N is the Avogadro number,

$$r = \left(\frac{18\,\chi(T)}{N}\right)^{1/3} \quad (6)$$

From eq. 6 it is possible to estimate the effective distance r at which the repulsive interaction, between the molecular magnetic moment and the superconducting diamagnetic enclosure will strongly affect the thermal diffusivity of this magnetic dipole. Let us compare for example the relevant size parameters for oxygen - a paramagnetic molecule versus that of diamagnetic nitrogen. The effective molecular diameter of oxygen as derived from Einstein Stokes (E.S.) equation using the diffusion constant of $O_2$ in ethanol (CRC Handbook of Chemistry and Physics, 64th Ed., 1984, pp. F-45) is 1.67 Angstrom. The same calculation for $N_2$ in carbon tetrachloride yields 1.24 Angstrom (CRC Handbook of Chemistry and Physics, 64th Ed., 1984, pp. F-45), in

comparison 2r for oxygen (using χ (91 °K) = $1.08 \times 10^{-2}$ ml/mole (Stoner, E.C. Magnetism and Atomic Structure (Methuen & Co. Ltd., London, 1926) pp. 142; Curie's corrected result χ = 32x0.0327/T))), is 1.37 Angstrom. Nitrogen on the other hand is diamagnetic χ (300 °K) = $-12 \times 10^{-6}$ ml/mole. We see that 2r is comparable with the effective diameter as calculated from E.S. eq. Pauling dimensions for $O_2$ are 2.8 Angstrom width and 3.9 Angstrom length and its kinetic diameter $\sigma$ = 3.46 Angstrom. Corresponding values for Nitrogen are: 3.0 Angstrom, 4.1 Angstrom and 3.64 Angstrom (breck, D.W. Zeolite Molecular Sieves, 636, 650 (Wilen, N.Y., 1974)). What seems to be a minor difference in the kinetic diameters of these two molecules is considered to be one of the important reasons why zeolites and glassy polymers show preferential sorption and permeation of oxygen over nitrogen. It follows that the repulsive interaction will increase the effective kinetic diameter of oxygen. Thus, for example, if air is diffused through a superconducting ceramic material at T < Tc a preferential permeability of nitrogen surprisingly exists unlike almost any other semi-permeable materials, that preferentially pass oxygen. When the average pore diameter is low enough ~<10 Angstrom the nitrogen enriched permeate should contain only a minute fractions of oxygen if at all. It is possible to effect the separation process with molecular gaseous species, with ions, radicals, etc., having a high paramagnetic contrast: one of the species being paramagnetic while the other is diamagnetic or at least weakly paramagnetic.

The invention is illustrated by way of examples with reference to the following experimental description and with reference to the enclosed Figures, in which

Figure 1 illustrates the magnetic moment $m_1$ and its mirror image $m_2$ in the superconducting wall,

Figure 2 illustrates schematically an experimental setup of the measurement of the permeabilities of $O_2$ and $N_2$ through high Tc ceramic pellets at a suitably low temperature;

Figure 3 illustrates the ratio of oxygen/nitrogen in the outflowing gas with two types of ceramic superconductors;

Figure 4 illustrates resistance/temperature for:

a) $YBa_2Cu_3O_{7-\delta}$ pellet;

b) for $YBa_2CU_3O_6$ rich pellet.

As an example, the possibility of preferential permeability of nitrogen over that of oxygen through $YBa_2CU_3O_{7-\delta}$ in the diamagnetic state is examined. Such separation process takes place for a diffusion controlled permeation of air through a superconducting pellet in the temperature range in which the diamagnetic susceptibility is fully developed. (The Meissner onset temperature in our samples was 102 °K and the diamagnetic effect was fully developed at ~77 °K). The permeation experiment was therefore performed using a low pressure gradient of 50 KPa starting at the lowest temperature possible, i.e., just above the $_{dew}$ point of air; 81.3 °K at 100 KPa. Below the dew line the results of the permeation experiments are obscured by the gas-liquid equilibria of oxygen and nitrogen.

Example 1

In an experiment conducted in this laboratory, see Fig. 2, dry air was passed over and diffused through a $YBa_2CU_3O_{7-\delta}$ pellet, 13 mm in diameter and 1 mm thick, mounted on a brass block which was cooled by liquid nitrogen. The composition of the outflow gas (~0.4 ml/min at 26 °C) was analyzed by a gas chromatograph in real time. The results, in the temperature range between 82 °K and 92 °K, are shown in Figure 3a. The critical transition temperature ($T_c$) for this pellet was 92 ± 0.5 °K, its resistance versus temperature behaviour is shown in Figure 4a. This sample was quite porous, its specific density was $\rho$ = 5.64 $g.cm^{-3}$ which should be compared with the specific theoretical density $\rho_{th}$ = 6.4 $g.cm^{-3}$.

In a control experiment an $YBa_2CU_3O_6$ rich pellet was prepared by a fast quench of a $YBa_2CU_3O_{7-\delta}$ pellet from 900 °C to liquid nitrogen temperature. This sample did not exhibit the Meissner effect and a plot of its resistance versus temperature is shown in Figure 4b. This pellet was similar in density and micro grain structure to the superconducting sample used in experiment 4a. It is apparent from comparison of the plots in Figures 3a and 3b, that the superconducting sample does impede the mobility of $O_2$ for T≤83 °K, and indeed shows preferential permeability for nitrogen, >90% $N_2$, in comparison to that of the control less than 80% $N_2$. This trend is followed by a sharp desorption of the trapped oxygen, up to 55% $O_2$, for T~85 °K, the permeate stream composition subsequently tails off to the ratio 0.268 of $O_2/N_2$ observed in the air composition used in this experiment.

The experimental results demonstrate the preferential permeability of nitrogen over that of oxygen in a temperature range in which the diamagnetism of the ceramic matrial is strong, followed by desorption of oxygen upon the increase of the magnetic susceptibility in the pellet.

Example 2

The same condition and superconducting membrane as described in Example 1 for $YBa_2CU_3O_{7-\delta}$ but switching the temperature on and off priodically between 82.5° K to 85° K yields pulsating device which produces $O_2$ or $N_2$ enriched air.

The separation process is applicable to any gaseous mixture of molecules which differ substantially in their magnetic properties: the separation being effected between paramagnetic and diamagnetic molecules. Examples of these mixtures are oxygen/nitrogen: NO from nitrogen, etc. A wide variety of superconductive materials can be used, there may be mentioned superconductive ceramics of the peroviskite-like structure of the high Tc superconductive type. There may be specifically mentioned of the CuOn type, where n is a number, such as

$Tl_2Ba_2CuO_6$ Tc = 80° K
$Bi_2Cu_1Sr_2Cu_2O_{8+\delta}$ Tc = 85° K
$YBa_2Cu_3O_{7-\delta}$ Tc = 92° K
$Tl_2Ca_1Ba_2Cu_2O_8$ Tc = 105° K
$Tl_2Ca_2Ba_2Cu_3O_{10}$ Tc = 125° K
$Bi_{1.8}Pb_{0.2}Ca_2Sr_2Cu_3O_x$ Tc = 111 K (x = 3 to approx. 15)

Thus, according to a preferred embodiment the separation system is based on a high Tc superconductor, in the superconductive, i.e., diamagnetic state. The material has to be at a temperature below Tc.

The superconductor material ought to be in a form permeable to the gaseous species. Possible separation means are sintered ceramic platelets, sintered ceramic films on a ceramic support, sintered ceramic hollow fibers, a ceramic powder in the micrometer (µm) and sub-micron size ranges of the high Tc superconductor in bulk or embedded in a polymeric matrix or membrane; in which latter case the membrane may enhance the separative effect.

Examples of such materials are: Poly(aminosiloxanes)

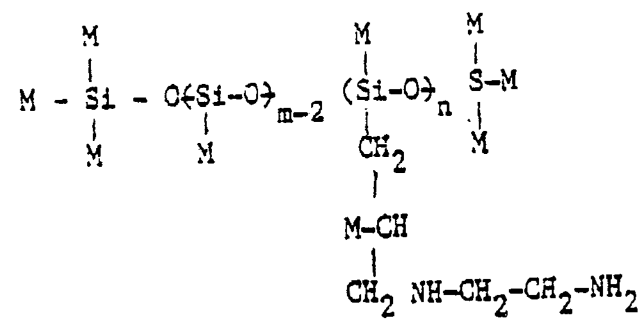

M≡$CH_3$
m and n respectively are integers
silicone rubber, natural rubber, SBR, butyl rubber polychloroprene, polyethylene (density 0.914 g/cm$^3$; and 0.964 g/cm$^3$),poly (dimethylphenylene oxide), polysulfone, polycarbonate, cellulose acetate. Separated species would be molecules, ions, radicals, having a high paramagnetic contrast,e.g. a mixture composed of one highly paramagnetic and one diamagnetic or weakly paramagnetic species.

Example 3

In another experiment the relative permeation of $O_2$ against $N_2$ was measured throug a relatively thick 9-mm $YBa_2Cu_3O_{7-\delta}$ pellet and through a $YBa_2Cu_3O_6$ -rich sample of the same geometry using a pressure gradient of 80 kPa and a flow rate of ~0.2 ml min$^{-1}$. The results, in the temperature range 85-88 K measured at a heating rate of 0.1 K min$^{-1}$, are presented in Table 1. Continuous flow of permeate with a compostion of 96% $N_2$ was easily attained. In this set of experiments high selectivity is observed, with $(O_2/N_2)_{air}/(O_2/N_2)_{permeate} \approx 5$ at 86.4° K

Example 4

Application of an external magnetic field, $H>H_c$ , to the diamagnetic membrane in the superconducting state was found to quench the preferential selectivity of the superconductor for nitrogen (against oxygen) that is observed for $T<Tc$ and $H=O$. Thus, the superconductor with the composition $Bi_{1.8}Pb_{0.2}Ca_2Sr_2Cu_3O_x$, a ceramic with a high Tc (111±1 K) and low Hc (<100 Oe at 4.2 K), was prepared to test this prediction. The permeation experiment was conducted through a 2-mm-thick pellet using a pressure gradient of 50 kPa, a flow rate of 0.4 ml $min^{-1}$ and a heating rate of 0.1 K $min^{-1}$. For air feed flow at a composition of 74%$N_2$ at 96° K the superconducting pellet produced $N_2$-enriched permeate of 90% nitrogen. Figure 3b shows the results for a magnetic field (H = O and H = 220 Oe) applied prependicularly to the surface of the pellet, The measured selectivity is shifted to a higher temperature range than that observed for $YBa_2Cu_3O_{7-\delta}$ (see Fig. 3a as is the desorption peak, which is at -102 K for the zero-field run. A field of 220 Oe is large enough to quench the selectivity effect as the magnetic flux penetrates the diamagentic membranes. Yielding a pulse of oxygen-enriched permeate (44% $O_2$). Switching on and off the external magnetic field yields pulsating membrane giving oxygen and/or nitrogen enriched air. (Note that at ~ 100 K, Hc<20 $O_e$

## FIGURE CAPTIONS

Figure 1. The magnetic moment $\overline{m}_1$ and its mirror image $\overline{m}_2$ in the superconducting wall.

Figure 2. Experimental set-up for measurement of $O_2$ and $N_2$ permeabilities through ceramic pellets at low temperature.

Figure 3. Oxygen to nitrogen ratio in the outflow gas as a function of temperature for $YBa_2Cu_3O_{7-\delta}$-(●), a $YBa_2Cu_3O_6$ rich pellet (O), and $Bi_{1.8}Pb_{0.2}Ca_2Sr_2Cu_3O_x$ in a field H = O (▲) and H = 220 Oe (Δ) ; x is a figure between 3 and approx. 15

Figure 4. Resistance versus temperature: a) for $YBa_2Cu_3O_{7-\delta}$ pellet; b) for $YBa_2Cu_3O_6$ rich pellet.

TABLE 1

| $O_2/N_2$ ratio in out-flow gas through $YBa_2Cu_3O_{7-\delta}$ and a $YBa_2Cu_3O_6$ -rich pellet as a function of temperature | | | |
|---|---|---|---|
| $YBa_2Cu_3O_{7-\delta}$ pellet | | $YBa_2Cu_3O_6$ -rich pellet | |
| $O_2/N_2$ | $T$ (K) | $O_2/N_2$ | $T$ (K) |
| 0.04 | 85.3 | 0.26 | 84.8 |
| 0.05 | 85.6 | 0.27 | 85.0 |
| 0.05 | 86.2 | 0.26 | 85.2 |
| 0.05 | 86.4 | 0.27 | 85.6 |
| 0.08 | 86.6 | 0.27 | 86.2 |
| 0.10 | 87.6 | 0.27 | 87.5 |

## Claims

1. A system for the separation of strongly paramagnetic molecules, ions, or radicals from diamagnetic or weakly paramagnetic molecules, ions or radicals comprising a permeable high Tc superconductor in gas-permeable form, and means for passing the gaseous mixture or part thereof through such superconductor.

2. A system according to claim 1 or 2, wherein the high Tc superconductor is of the perovskite type.

3. A system according to claim 1, wherein the superconductor is a ceramic material in the form of a pellet, a membrane, a hollow fiber, a layer supported by a membrane or a ceramic powder of the µm size range, a superconducting powder embedded in a polymer membrane.

4. A system according to any one of claims 1 to 3, where the superconductor is selected from copper oxide type materials such as :

$Tl_2Ba_2CuO_6$ Tc = 80 K

$Bi_2Cu_1Sr_2Cu_2O_{8+\delta}$ Tc = 85 K
$YBa_2Cu_3O_{7-\delta}$ Tc = 92 K
$Tl_2Ca_1Ba_2Cu_2O_8$ Tc = 105 K
$Tl_2Ca_2Ba_2Cu_3O_{10}$ Tc = 125 K
$Bi_{1.8}Pb_{0.2}Ca_2Sr_2Cu_3O_x$, Tc = 111 (x = 3 to approx. 15)

5. A system according to any one of claims 1 to 4, wherein a stream of air is contacted with a surface of a superconductive material, means are provided for collecting separately the gaseous species permeating through such medium and for collecting the gaseous species reflected from such surface, means being provided for the cooling of the superconductor to below Tc.

6. A method for the separation of gaseous consists of paramagnetic molecules, ions or radicals from diamagnetic or weakly paramagnetic molecules which entails contacting such a mixture with a high Tc superconductive permeable material in a manner such that an enrichment of one of said molecules, ions or radicals occurs by permeation through said permeable material.

7. The method of claim 6, wherein said superconductor is a porous ceramic in pellet or powder form, a hollow fiber, or a ceramic film or powder supported by a suitable permeable support.

8. The method of claim 6 or 7, wherein said material is ceramic selected from the copper oxide family as the matérials listed below
$Tl_2Ba_2CuO_6$ Tç = 80 K
$Bi_2Cu_1Sr_2Cu_2O_{8+x}$ Tc = 85 K
$YBa_2Cu_3O_{7-x}$ Tc = 92 K
$TL_2Ca_1Ba_2Cu_2O_8$ Tc = 105 K
$Tl_2Ca_2Ba_2Cu_3O_{10}$ Tc = 125 K
$Bi_{1.8}Pb_{0.2}Ca_2Sr_2Cu_3O_x$, Tc = 111 K

9. The method of any one of claims 6 to 8, wherein said gaseous material separated is oxygen/nitrogen mixture

10. A method according to any one of claims 6 to 9, where the superconductive semi-permeable material is exposed to periodical cycles below Tc and near/or above Tc perferentially permeating in the former the diamagnetic molecules and realeasing enriched pulse of the paramagentic component in the latter.

11. A method according to any one of claims 6 to 10 where the superconductor semi-permeable material is exposed periodically to external magentic field large enough to quench the selectivity releasing thus a pulse enriched with paramagnetic molecules.

12. Method according to any one of claims 8 to 11, where $O_2/N_2$ or air mixtures are used.

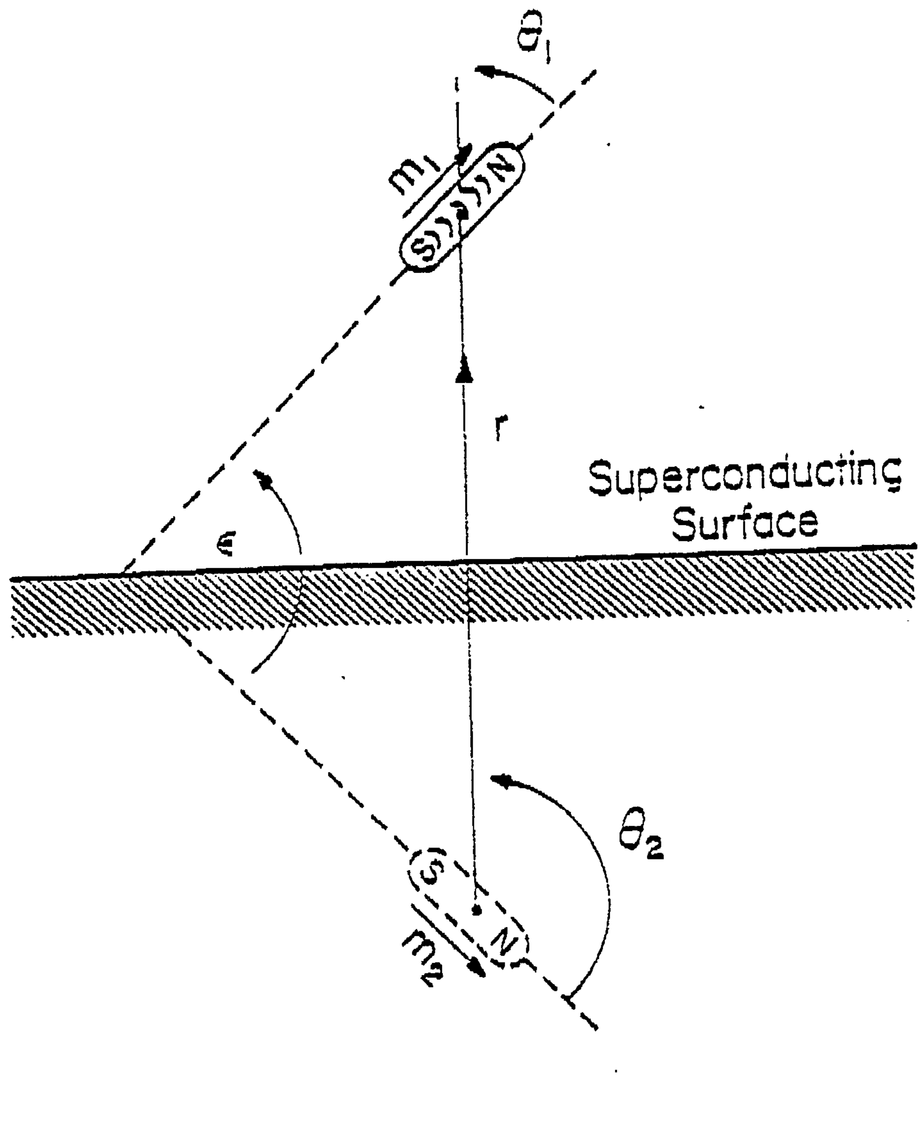


Figure 1

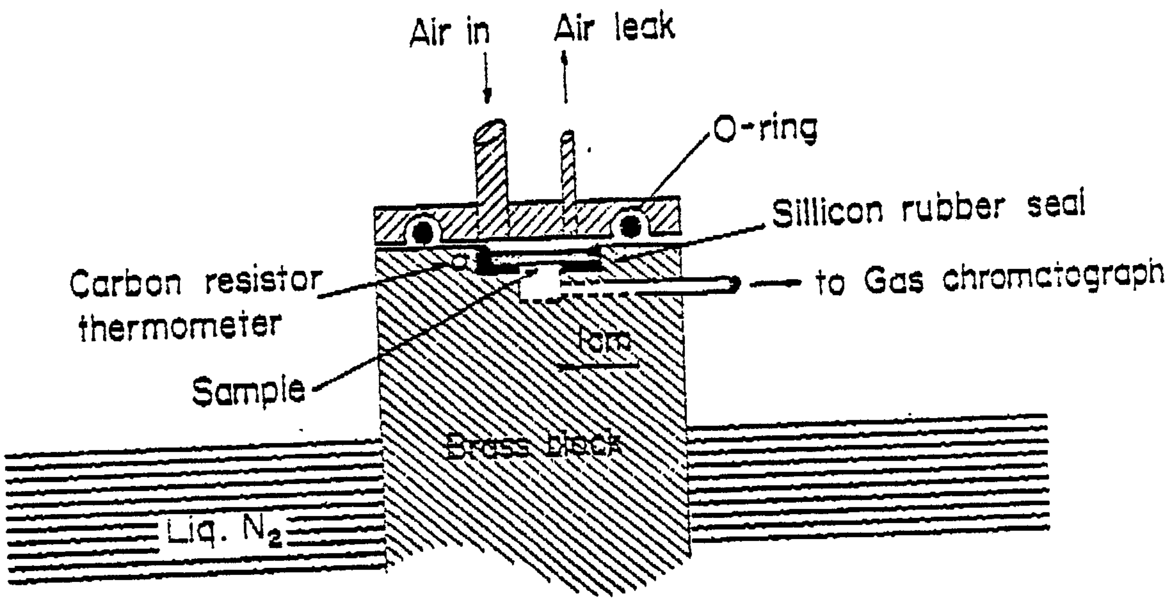
Air in
Air leak
O-ring
Sillicon rubber seal
Carbon resistor thermometer
to Gas chromatograph
1cm
Sample
Brass block
Liq. $N_2$

Figure 2

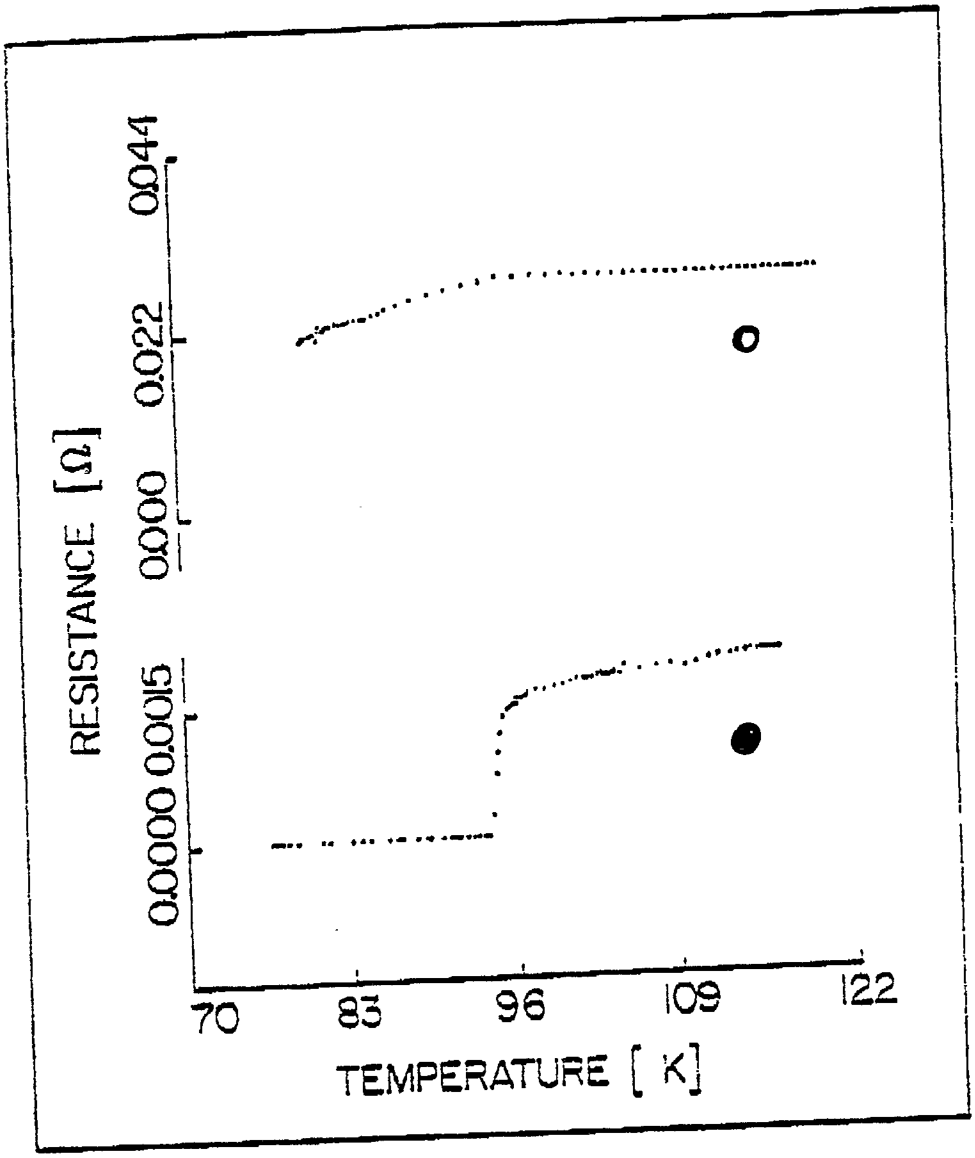


Figure 4 (see experiment 3a from Fig. 3)

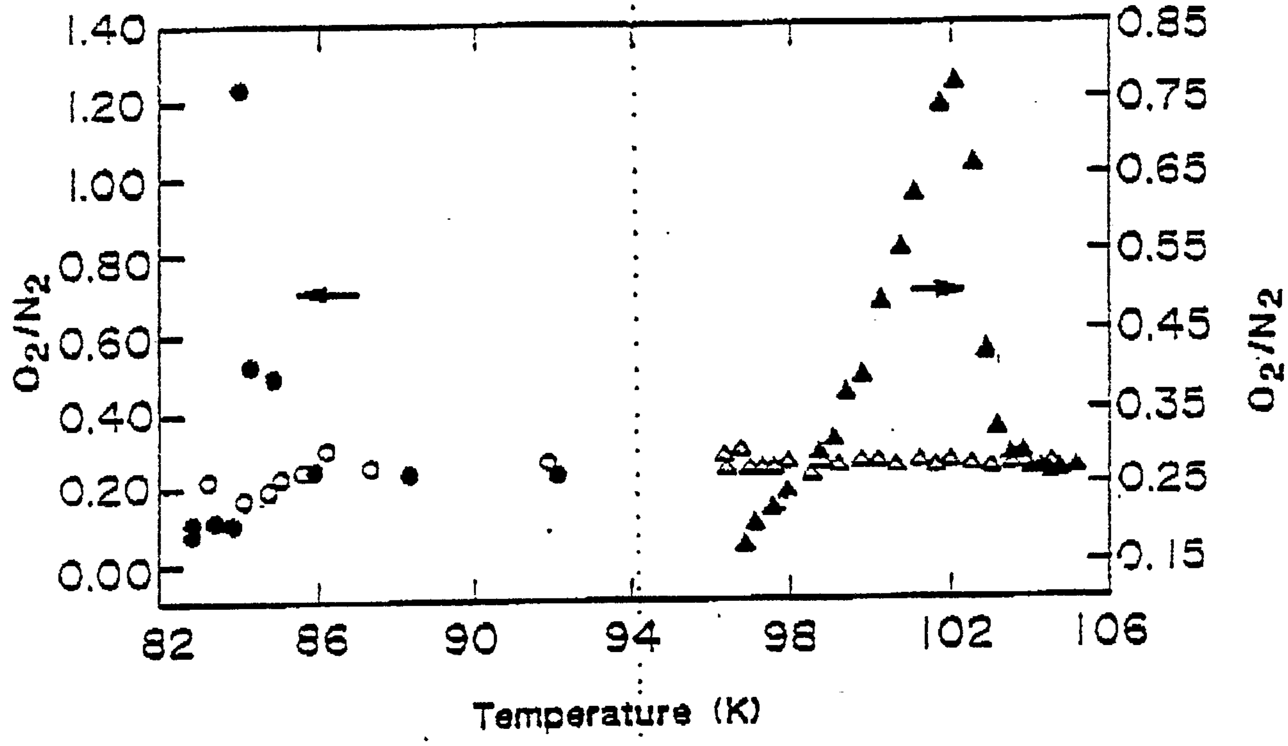


Figure 3

left side

experiment a (●, ○)

right side

experiment b (▲, △)